# EUROPÄISCHE PATENTSCHRIFT

(11) **EP 3 287 314 B1**
(45) Veröffentlichungstag und Bekanntmachung des Hinweises auf die Patenterteilung: **04.03.2020**
(21) Anmeldenummer: 17180731.6
(22) Anmeldetag: 11.07.2017
(51) Int. Cl.: B60N 2/22, B60N 2/30, B60N 2/68, B60N 2/225, B60N 2/235

(54) **FAHRZEUGSITZ MIT VORRICHTUNG**
VEHICLE SEAT WITH DEVICE
SIÈGE DE VEHICULE AVEC DISPOSITIF

(30) Priorität: 17.08.2016 DE 102016115266
(43) Veröffentlichungstag der Anmeldung: 28.02.2018
(73) Patentinhaber: GRAMMER AG, 92224 Amberg (DE)
(72) Erfinder: Schanderl, Florian, 92521 Schwarzenfeld (DE); Haller, Thomas, 92289 Ursensollen (DE)
(74) Vertreter: Hannke, Christian

(56) Entgegenhaltungen:
- DE-A1-102014 220 405
- FR-A1- 2 842 476
- US-A- 5 263 763

## Beschreibung

Die Erfindung betrifft einen Fahrzeugsitz mit einer Vorrichtung zum Verbinden eines in Fahrzeugsitzhöhenrichtung gesehenen unteren Bereichs einer Rückenlehne mit einem in Fahrzeugsitzlängsrichtung gesehenen hinteren Bereich eines Sitzteils des Fahrzeugsitzes, wobei eine um eine in Fahrzeugsitzbreitenrichtung verlaufende erste Drehachse drehbare Neigungsverstellungseinrichtung zum Einstellen einer Neigung der Rückenlehne relativ zum Sitzteil mit dem Sitzteil und der Rückenlehne verbunden ist.

Es sind aus dem Stand der Technik derartige Fahrzeugsitze bekannt. Vorliegend ist einerseits die Neigungsverstellungseinrichtung mit dem Sitzteil und andererseits mit der Rückenlehne verbunden. Durch Betätigung der Neigungsverstellungseinrichtung kann die Neigung der Rückenlehne relativ zum Sitzteil verändert werden, so dass der Fahrzeugsitz gemäß den Komfortvorstellungen einer Person angepasst werden kann.

Die Montage bzw. der Zusammenbau eines derartigen Fahrzeugsitzes ist jedoch zeitaufwändig und erfordert nicht selten den Einsatz von mehreren Personen, da die Rückenlehne gegenüber dem Sitzteil durch eine Person gehalten und positioniert werden muss und gleichzeitig die Rückenlehne mit dem Sitzteil verschraubt werden muss. Die Fr 2842476 zeigt die Merkmale des Oberbegriffs des Anspruchs 1.

Es ist demzufolge Aufgabe der vorliegenden Erfindung, eine Vorrichtung und ein Verfahren bereitzustellen, mittels welcher die Verbindung zwischen Rückenlehne und Sitzteil bzw. die Montage des Fahrzeugsitzes vereinfacht werden kann.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es einen Fahrzeugsitz mit einer Vorrichtung zum Verbinden eines in Fahrzeugsitzhöhenrichtung gesehenen unteren Bereichs einer Rückenlehne mit einem in Fahrzeugsitzlängsrichtung gesehenen hinteren Bereich des Sitzteils eines Fahrzeugsitzes bereitzustellen, wobei eine um eine in Fahrzeugsitzbreitenrichtung verlaufende erste Drehachse drehbare Neigungsverstellungseinrichtung zum Einstellen einer Neigung der Rückenlehne relativ zum Sitzteil mit dem Sitzteil und der Rückenlehne verbunden ist, wobei die Vorrichtung ein mit der Neigungsverstellungseinrichtung fest verbundenes und um die erste Drehachse drehbares Adapterelement umfasst, welches eine sich in einem ersten Winkel zu einer Rückenlehnenlängsrichtung erstreckende erste Aussparung aufweist, wobei die erste Aussparung mit einer an der Rückenlehne angeordneten und komplementär zu der ersten Aussparung ausgebildeten ersten Lasche verbindbar ist.

Besonders bevorzugt ist das Adapterelement mit der Neigungsverstellungseinrichtung verschweißt, verschraubt, vernietet oder dergleichen, wobei eine Schweißverbindung bevorzugt wird. Durch Betätigung der Neigungsverstellungseinrichtung, also einer Drehung der Neigungsverstellungseinrichtung um die erste Drehachse, wird aufgrund der festen Verbindung des Adapterelements zu der Neigungsverstellungseinrichtung das Adapterelement ebenfalls um die erste Drehachse gedreht.

Die erste Aussparung und die dazu verbundene und komplementäre ausgebildete Lasche begrenzen durch ihre Verbindung zueinander die Freiheitsgrade der Rückenlehne zu dem Sitzteil durch das Adapterelement. Durch Einschränkung bzw. Erniedrigung der Freiheitsgrade ist die Rückenlehne gegenüber dem Sitzteil besser anordenbar und entsprechend auch besser miteinander verbindbar.

Besonders bevorzugt sind mehrere Vorrichtungen vorgesehen, beispielsweise eine Vorrichtung auf der linken Seite des Sitzteils und eine Vorrichtung auf der rechten Seite des Sitzteils.

Gemäß der erfindungsgemäßen Anordnung des Adapterelements fest verbunden mit der Neigungsverstellungseinrichtung ist der erste Winkel konstant, da mit der Drehung der Neigungsverstellungseinrichtung das Adapterelement als auch die Rückenlehne in gleichem Maße um die erste Drehachse gedreht werden.

Erfindungsgemäß kann die Rückenlehne gegenüber dem Sitzteil noch besser angeordnet werden, da die Rückenlehne eine zweite Aussparung aufweist, welche mit einem mit dem Adapterelement fest verbundenen Bolzenelement, welches um die erste Drehachse drehbar angeordnet ist, in Wirkkontakt bringbar ist.

Durch die Laschenverbindung, bestehend aus Lasche und erste Aussparung, kann die radiale Bewegung der Rückenlehne gegenüber dem Sitzteil beschränkt werden. Durch die zweite Aussparung und deren Verbindung zu dem Bolzenelement muss die Rückenlehne nicht mehr gegenüber dem Sitzteil durch eine Person gehalten werden. Insbesondere kann die Rückenlehne mittels der ersten und zweiten Aussparung, dem Bolzenelement und der Lasche einfach auf das Adapterelement und daher insbesondere auf das Sitzteil aufgesteckt werden.

Vorzugsweise ist das Bolzenelement fest mit dem Adapterelement verbunden und dreht sich bei Drehung des Adapterelements, hervorgerufen durch Betätigung der Neigungsverstellungseinrichtung, ebenfalls um die erste Drehachse.

Gemäß einer besonders bevorzugten Ausführungsform umfasst das Bolzenelement mindestens einen flächig ausgebildeten Bereich, welcher in Fahrzeugsitzbreitenrichtung gesehen einen zweiten Winkel mit der Rückenlehnenlängsrichtung einschließt.

Gemäß einer weiteren bevorzugten Ausführungsform weist die Vorrichtung eine Spiralfeder auf, welche mit einem ersten Spiralfederende mit dem Bolzenelement verbunden ist, wobei das zweite Spiralfederende mit einem ersten Anschlagelement des Adapterelements und/oder mit einem zweiten Anschlagelement des Sitzteils wechselwirkt.

Weist hierbei das Bolzenelement mindestens einen flächig ausgebildeten Bereich aus und ist das erste Spiralfederende komplementär dazu ausgebildet, so ist die Spiralfeder gegenüber dem Bolzenelement ortsfest angeordnet.

Das zweite Anschlagelement ist entsprechend ortsfest gegenüber dem Sitzteil angeordnet, wohingegen das erste Anschlagelement ortsfest gegenüber dem Adapterelement angeordnet und bei einer Drehung des Adapterelements entsprechend um die erste Drehachse gedreht wird.

Die genauere Ausgestaltung und Funktionsweise des ersten und zweiten Anschlagelements mit der Spiralfeder wird im Folgenden genauer dargestellt.

Ähnlich wie die erste Aussparung ist auch der erste Anschlag mit einem bestimmten dritten Winkel gegenüber der Rückenlehnenlängsrichtung angeordnet. Der zweite Anschlag, welcher ortsfest gegenüber dem Sitzteil angeordnet ist, ist mit einem konstanten vierten Winkel gegenüber der Fahrzeugsitzhöhenrichtung angeordnet.

Wird die Rückenlehne um die erste Drehachse gedreht, so verändert sich der Winkel zwischen Rückenlehnenlängsrichtung und Fahrzeugsitzhöhenrichtung ständig. Es kann daher vorkommen, dass, in einer radialen Richtung von der ersten Drehachse weg gesehen, das erste und das zweite Anschlagelement auf einer gemeinsamen radialen Strecke angeordnet sind. Die Spiralfeder weist hierbei eine Vorspannung auf.

In diesem Fall des Übereinstimmens von dem ersten und dem zweiten Anschlagelement steht die Spiralfeder, insbesondere dem zweiten Spiralfederende, sowohl mit dem ersten als auch dem zweiten Anschlagelement in Wirkkontakt. Wird die Rückenlehne nun in Fahrzeugsitzlängsrichtung weiter nach vorne gedreht, so wird das erste Anschlagelement entsprechend mitgedreht und ebenfalls das zweite Spiralfederende. Dadurch bleibt das zweite Spiralfederende weiterhin mit dem ersten Anschlagelement in Kontakt und es wird gleichzeitig der Kontakt zwischen dem zweiten Spiralfederende und dem zweiten Anschlagelement gelöst.

Dadurch, dass das erste Spiralfederende mittels des Bolzenelements ortsfest gegenüber dem Adapterelement angeordnet ist und ebenso das erste Anschlagelement ortsfest an dem Adapterelement angeordnet ist, wird die Vorspannung der Spiralfeder nicht geändert, so dass ohne Kraft aufzuwenden die Rückenlehne nach vorne geklappt werden kann.

Wird hingegen die Rückenlehne in Fahrzeugsitzlängsrichtung nach hinten bewegt, so ändert sich die Situation. Das zweite Spiralfederende steht weiterhin mit dem zweiten Anschlagelement in Wirkkontakt und das erste Anschlagelement wird von dem zweiten Spiralfederende weg bewegt. Wird das Adapterelement mit der Spiralfeder weiter um die erste Drehachse nach hinten bewegt, so wird die Vorspannung der Spiralfeder geändert, da das erste Spiralfederende entsprechend dem Adapterelement bewegt wird und das zweite Spiralfederende weiterhin mit dem zweiten Anschlagelement in Kontakt steht.

Gemäß einer weiteren Ausführungsform ist die Spiralfeder zwischen der Rückenlehne und dem Adapterelement angeordnet.

Gemäß einer besonders bevorzugten Ausführungsform können die Lasche und die zweite Aussparung leicht an der Rückenlehne angeordnet werden, wenn an der Rückenlehne ein Adaptergehäuse angeordnet ist, welches die Lasche und die zweite Aussparung aufweist, wobei das Adaptergehäuse mit dem Adapterelement verbindbar ist, beispielsweise über Schraubverbindungen oder dergleichen.

Zusätzlich kann durch das Adaptergehäuse die Spiralfeder geschützt werden und auch die Person oder Personen von der Spiralfeder geschützt werden, wenn die Spiralfeder zwischen dem Adaptergehäuse und dem Adapterelement angeordnet ist.

Gemäß einer Ausführungsform kann der Bauraum optimiert werden, wenn das Adapterelement einen ersten und einen zweiten Bereich aufweist, wobei der erste Bereich in einer ersten Ebene und der zweite Bereich in einer zweiten Ebene angeordnet sind, wobei die erste Ebene und die zweite Ebene parallel zueinander ausgebildet sind.

Vorzugsweise ist der zweite Bereich derart ausgebildet, dass dieser im Wesentlichen der Form der Spiralfeder entspricht.

Das Adaptergehäuse weist entsprechend einen dritten und einen vierten Bereich auf, wobei der dritte Bereich in einer dritten Ebene und der vierte Bereich in einer vierten Ebene angeordnet sind und die dritte Ebene und die vierte Ebene parallel zueinander ausgebildet sind. Analog zu dem zweiten Bereich ist der vierte Bereich derart ausgestaltet, dass dieser im Wesentlichen der Form der Spiralfeder entspricht.

Besonders bevorzugt weisen der erste und der dritte Bereich Durchgänge auf, so dass diese mittels von Schrauben oder dergleichen miteinander verbunden werden können. Vorzugsweise ist in Fahrzeugsitzbreitenrichtung gesehen das Adapterelement zwischen der Rückenlehne und dem Sitzteil angeordnet, wobei zwischen dem Adapterelement und dem Sitzteil die Neigungsverstellungseinrichtung angeordnet ist.

Gemäß einer besonders bevorzugten Ausführungsform beträgt der erste Winkel 0° oder 180°. Das heißt, dass sich die erste Aussparung in Rückenlehnenlängsrichtung erstreckt.

Gelöst wird die zugrunde liegende Aufgabe auch von einem Verfahren gemäß Anspruch 10. Kerngedanke ist es hierbei ein Verfahren zum Verbinden eines in Fahrzeugsitzhöhenrichtung gesehenen unteren Bereichs einer Rückenlehne mit einem in Fahrzeugsitzlängsrichtung gesehenen hinteren Bereich eines Sitzteils eines Fahrzeugsitzes bereitzustellen, wobei eine um eine in Fahrzeugsitzbreitenrichtung verlaufende erste Drehachse drehbare Neigungsverstellungseinrichtung zum Einstellen einer Neigung der Rückenlehne relativ zum Sitzteil mit dem Sitzteil verbunden ist, wobei die Vorrichtung ein mit der Neigungsverstellungseinrichtung fest verbundenes und um die erste Drehachse drehbares Adapterelement umfasst, welches eine sich in einem ersten Winkel zu einer Rückenlehnenlängsrichtung erstreckende erste Aussparung aufweist, wobei die erste Aussparung mit einer an der Rückenlehne angeordneten und komplementär zu der ersten Aussparung ausgebildeten ersten Lasche verbunden wird.

Gemäß einer besonders bevorzugten Ausführungsform umfasst die Vorrichtung weiter ein Bolzenelement und eine Spiralfeder, welche ein mit dem Bolzenelement verbundenes erstes Spiralfederende aufweist, wobei nach Verbinden der ersten Aussparung mit der ersten Lasche die Spiralfeder in einem einmaligen Montageschritt eine Vorspannung der Spiralfeder eingestellt wird.

Der einmalige Montageschritt umfasst dabei die Schritte (a) Drehen der Rückenlehne in Fahrzeugsitzlängsrichtung nach vorne, (b) Drehen der Rückenlehne nach hinten.

Die Spiralfeder wird zunächst auf das Bolzenelement aufgesteckt, so dass das erste Spiralfederende ortsfest mit dem Bolzenelement verbunden ist. Das zweite Spiralfederende ist dabei weder mit dem ersten noch mit dem zweiten Anschlagelement in Wirkkontakt. Insbesondere ist das zweite Spiralfederende in Längsrichtung gesehen vor dem ersten und dem zweiten Anschlagelement angeordnet, wobei das zweite Anschlagelement vor dem ersten Anschlagelement angeordnet ist.

Dabei wird beim Schritt (a) das zweite Spiralfederende entlang dem ersten Anschlagelement solange zwangsgeführt, bis das zweite Spiralfederende das zweite Anschlagelement, insbesondere einen zweiten Anschlagbereich, überspringt. Die grundlegende Vorspannung der Spiralfeder ist eingestellt. Jedoch befindet sich das zweite Spiralfederende nun zwischen dem ersten und dem zweiten Anschlagelement, so dass bisher nur ein Wirkkontakt des zweiten Spiralfederendes mit dem zweiten Anschlagelement möglich ist. Um einen Wirkkontakt mit dem ersten Anschlagelement zu ermöglichen, ist es notwendig, dass zweite Spiralfederende in Längsrichtung gesehen sowohl hinter dem ersten als auch dem zweiten Anschlagelement angeordnet ist.

Dies wird in dem Schritt (b) hergestellt, indem die Rückenlehne in Längsrichtung gesehen wieder nach hinten gedreht wird. Da im Schritt (a) das zweite Spiralfederende zwischen dem ersten und dem zweiten Anschlagelement angeordnet ist, wird durch Drehung der Rückenlehne nach hinten das erste Anschlagelement nach vorne bewegt. Das zweite Spiralfederende bewegt sich zwangsführt an dem zweiten Anschlagelement und überspringt auch das erste Anschlagelement.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: ein Adapterelement einer Vorrichtung gemäß einer bevorzugten Ausführungsform;
- Fig. 1B: ein Bolzenelement einer Vorrichtung gemäß einer bevorzugten Ausführungsform;
- Fig. 1C: ein Adaptergehäuse einer Vorrichtung gemäß einer bevorzugten Ausführungsform;
- Fig. 2: eine Explosionsansicht einer Vorrichtung gemäß einer bevorzugten Ausführungsform;
- Fig. 3A: ein schematisches Verbinden der Rückenlehne und eines Sitzteils mittels einer Vorrichtung gemäß einer besonders bevorzugten Ausführungsform;
- Fig. 3B: ein schematisches Verbinden der Rückenlehne und eines Sitzteils mittels einer Vorrichtung gemäß einer besonders bevorzugten Ausführungsform;
- Fig. 3C: ein schematisches Verbinden der Rückenlehne und eines Sitzteils mittels einer Vorrichtung gemäß einer besonders bevorzugten Ausführungsform;
- Fig. 3D: die Vorrichtung gemäß einer bevorzugten Ausführungsform in einer Vorderansicht;
- Fig. 4A: den Fahrzeugsitz in einer ersten Stellung;
- Fig. 4B: den Fahrzeugsitz in einer nach hinten geneigten Stellung;
- Fig. 4C: den Fahrzeugsitz in einer nach vorne geneigten Stellung;
- Fig. 5: schematische Ansicht eines Adapterelements mit einem Bolzenelement;
- Fig. 6: die Elemente, welche mit dem Sitzteil fest verbunden sind;
- Fig. 7: die Elemente der Figur 6 in einem montierten Zustand in einer Vorderansicht;
- Fig. 8A-8H: ein schematisches Vorgehen zum Herstellen einer Vorspannung der Spiralfeder;

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

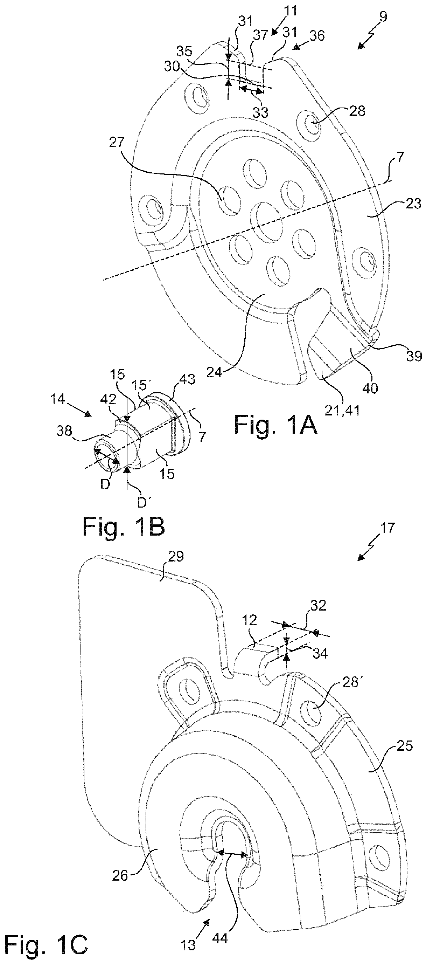

In den Figuren 1A-1C werden verschiedene Bauteile einer Vorrichtung 1 gemäß einer besonders bevorzugten Ausführungsform gezeigt. Dabei zeigt die Figur 1A ein Adapterelement 9, die Figur 1B ein Bolzenelement 14 und die Figur 1C ein Adaptergehäuse 17.

Erfindungsgemäß ist das Adapterelement 9 mit einer Neigungsverstellungseinrichtung 8 (hier nicht gezeigt) fest verbunden. Dazu weist vorzugsweise das Adapterelement 9 mindestens eine erste Verbindungsstelle 27 auf, die mit ersten komplementären Verbindungsstellen 27' (hier nicht gezeigt) verbindbar sind, insbesondere verschweißbar sind. Die Verbindungsstellen 27, 27' dienen insbesondere der Positionierung des Adapterelement 9 gegenüber der Neigungsverstellungseinrichtung 8. Das Adapterelement 9 ist durch die feste Verbindung zu der Neigungsverstellungseinrichtung 8 ebenfalls um die erste Drehachse 7 drehbar angeordnet.

Weiter erfindungsgemäß weist das Adapterelement 9 eine erste Aussparung 11 auf, welche mit einer ersten Lasche 12 verbindbar ist. Vorzugsweise weist dabei die erste Aussparung 11 einen zentralen Bereich 30 sowie zumindest einen Seitenbereich 31 auf, vorliegend zwei Seitenbereiche 31. Der zentrale Bereich 30 ist hierbei in seinen Dimensionen derart ausgebildet, dass eine Breite 31 der Lasche 12 im Wesentlichen einer Breite 33 des zentralen Bereichs 30 entspricht. Darüber hinaus ist eine Höhe 35 der Aussparung 11 größer als eine Höhe 34 der Lasche 12.

Die Aussparung 11 ist vorliegend im Wesentlichen trichterförmig bzw. in der Form eines Trichters 36 ausgebildet, wobei der zentrale Bereich 30 ist in einer Draufsicht auf das Adapterelement im Wesentlichen rechteckig ausgestaltet ist. Die Seitenbereiche 31 bilden dabei in einer Draufsicht des Adapterelements 9 die Schenkel eines Trapezes aus, wobei die kürzere Grundseite 37 des Trapezes eine Seite des Rechtecks des zentralen Bereichs 30 bildet.

Weiter ist gemäß der Figur 1A zu erkennen, dass das Adapterelement 9 einen ersten Bereich 23 und einen zweiten Bereich 24 aufweist, wobei sich der erste Bereich 23 in einer ersten Ebene und der zweite Bereich 24 in einer zweiten Ebene erstrecken, wobei die erste Ebene parallel zu der zweiten Ebene ausgebildet ist.

Weiter umfasst das Adapterelement 9 ein erstes Anschlagelement 21, welches mit dem zweiten Bereich 24 des Adapterelements 9 mit einem Anfangsbereich 39 verbunden ist und einen Mittelbereich 40 und einen Endbereich 41 aufweist. Insbesondere der Mittelbereich 40 erstreckt sich unter anderem in Richtung der ersten Drehachse 7 weg von dem zweiten Bereich 24. Der Mittelbereich 40 geht in einen Endbereich 41 über, welcher sich vorzugsweise in einer dritten Ebene erstreckt, wobei die dritte Ebene parallel zu der ersten Ebene ist und wobei die erste Ebene zwischen der dritten und der zweiten Ebene angeordnet ist.

Weiter ist der Figur 1A zu entnehmen, dass der erste Bereich 23 mindestens eine zweite Verbindungsstelle 28 aufweist, welche mit zweiten Verbindungsstellen 28' des ersten Bereichs 25 des Adaptergehäuses 17 mittels einer Verbindung, beispielsweise durch eine Schraubverbindung oder dergleichen, verbindbar sind.

Der Figur 1B ist hierbei ein Bolzenelement 14 zu entnehmen, welches mit dem Adapterelement 9 durch einen Verbindungsabschnitt 43 fest verbunden werden kann, so dass das Bolzenelement 14 ebenfalls um die erste Drehachse 7 drehbar ist. Bevorzugt wird der Verbindungsabschnitt 43 mit dem Adapterelement 9 verschweißt. Weiter umfasst das Bolzenelement 14 einen Abschnitt, welcher zumindest einen flächig ausgebildeten Bereich 15 und einen kreisartigen Bereich 15' mit Durchmesser D' aufweist. Vorliegend sind zwei derartige flächige Bereiche 15 angeordnet. Weiter umfasst das Bolzenelement 14 einen zylinderförmigen Abschnitt 38, welcher sich an dem Abschnitt mit den flächigen Bereichen 15 anschließt. Der zylinderförmige Abschnitt 38 weist einen Durchmesser D auf, welcher einer Breite 44 einer zweiten Aussparung 44 entspricht.

Die zweite Aussparung 13 ist hierbei ähnlich zu der ersten Aussparung 11 ausgebildet, weist also ebenso einen zentralen Bereich auf, der vorliegend jedoch im Wesentlichen kreisförmig ausgebildet ist, und einen Trichter auf.

Durch die trichterförmige Ausgestaltung kann einerseits die erste Aussparung 11 leichter mit der ersten Lasche 12 und andererseits die zweite Aussparung 13 leichter mit dem Bolzenelement 14 verbunden werden.

Weiter weist das Bolzenelement einen Übergangsbereich 42 zwischen dem Abschnitt mit flächigen Bereichen 15 und dem zylinderförmigen Bereich 38 auf.

Insbesondere beträgt der Durchmesser D des zylinderförmigen Bereichs 38 höchstens einen Abstand zwischen den vorliegend zwei parallel zueinander flächig ausgebildeten Bereichen 15 des Bolzenelements 14.

Weiter umfasst das Adaptergehäuse 17 eine Adapterplatte 29, mittels welcher das Adaptergehäuse 17 mit der Rückenlehne 2 verbindbar ist.

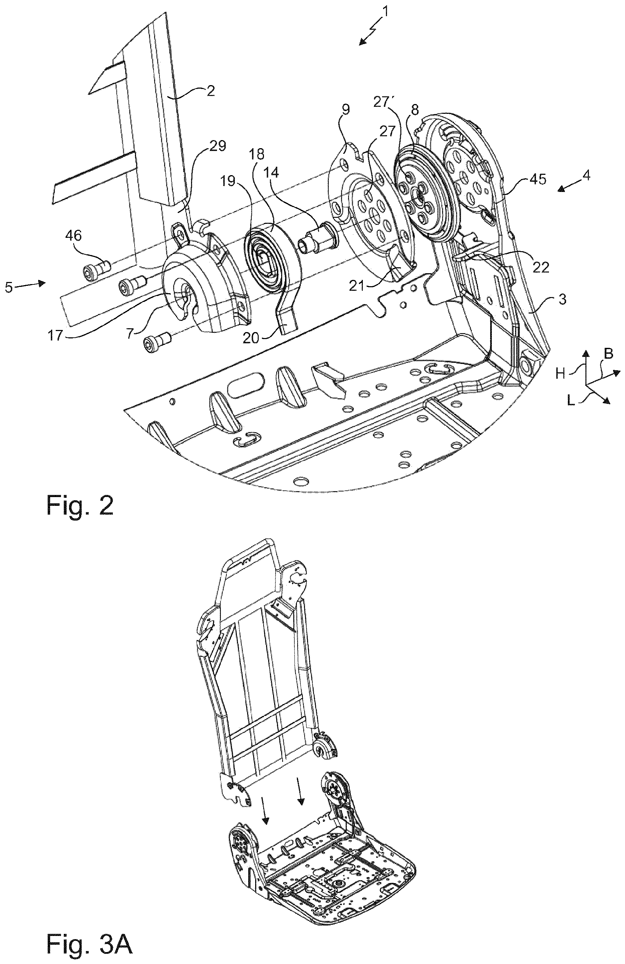

Der Figur 2 ist hierbei eine Vorrichtung 1 gemäß einer bevorzugten Ausführungsform und eine Rückenlehne 2 sowie ein Sitzteil 3 zu entnehmen. Das Sitzteil 3 weist im seinem hinteren Bereich 4 insbesondere einen sich in Fahrzeugsitzhöhenrichtung H erstreckenden Abschnitt 45. Mit dem Sitzteil 3, vorliegend dem Abschnitt 45, ist eine Neigungsverstellungseinrichtung 8 fest mit dem Sitzteil 3 bzw. dem Abschnitt 45 verbunden.

Mit der Rückenlehne 2 ist das Adaptergehäuse 17 mittels der Adapterplatte 29 verbunden. Darüber hinaus ist an der Neigungsverstellungseinrichtung 8 das Adapterelement 9 angeordnet, wobei zumindest die ersten Verbindungsstellen 27 mit den ersten komplementären Verbindungsstellen 27' fest verbunden sind, so dass das Adapterelement 9 fest mit der Neigungsverstellungseinrichtung 8 verbunden ist.

Mit dem Adapterelement 9 ist das Bolzenelement 14 fest verbunden, und mit dem Bolzenelement 14 ist eine Spiralfeder 18 verbunden, welche ein erstes Spiralfederende 19 und in zweites Spiralfederende 20 aufweist. Das erste Spiralfederende 19 ist dabei entsprechend dem Abschnitt mit flächigen Bereichen 15 des Bolzenelements 14 ausgebildet und derart dimensioniert, dass das erste Spiralfederende 19 den Abschnitt mit flächigen Bereichen 15 formschlüssig umschließt.

Weiter sind das Adaptergehäuse 17 und das Adapterelement 9 durch Schrauben 46 miteinander verbunden. Insbesondere sind auch noch weitere lösbare Verbindungen denkbar, so dass die Rückenlehne 2 leicht und schnell wieder von dem Sitzteil 3 gelöst werden kann.

Zusätzlich weist das Sitzteil 3 noch ein zweites Anschlagelement 22 auf.

Das Adaptergehäuse 17 mit der ersten Lasche 12 und der zweiten Aussparung 13 sind als eine erste Baugruppe 50 mit der Rückenlehne 2 verbunden, die Neigungsverstellungseinrichtung 8, das Adapterelement 9 und das Bolzenelement sind als eine zweite Baugruppe 51 mit dem Sitzteil 3 verbunden.

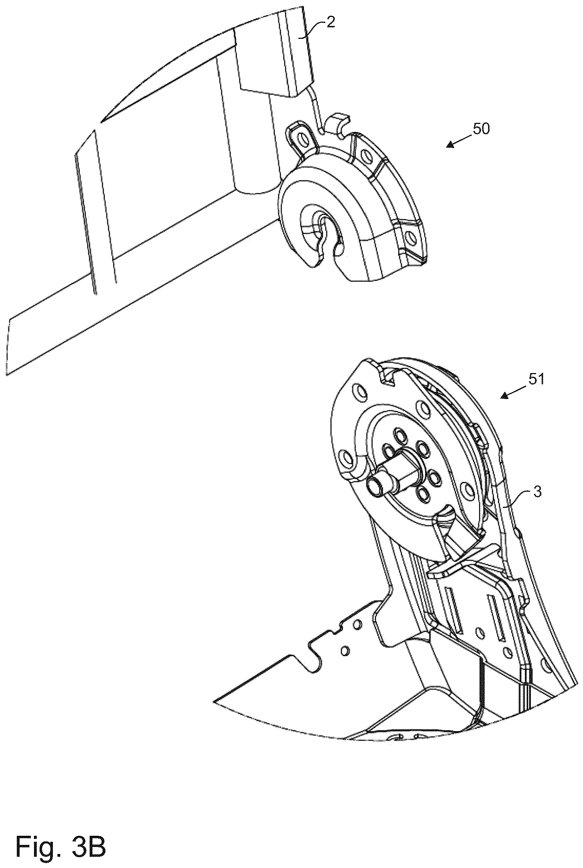

Durch die Anordnung und Ausgestaltung der ersten 11 und zweien Aussparung 13, der ersten Lasche 12 und dem Bolzenelement 14 zueinander können, wie in den Figuren 3A- 3D, das Sitzteil 3 und die Rückenlehne 2 leicht miteinander verbunden werden, so dass ein Verschrauben oder dergleichen ohne größere Anstrengung möglich ist.

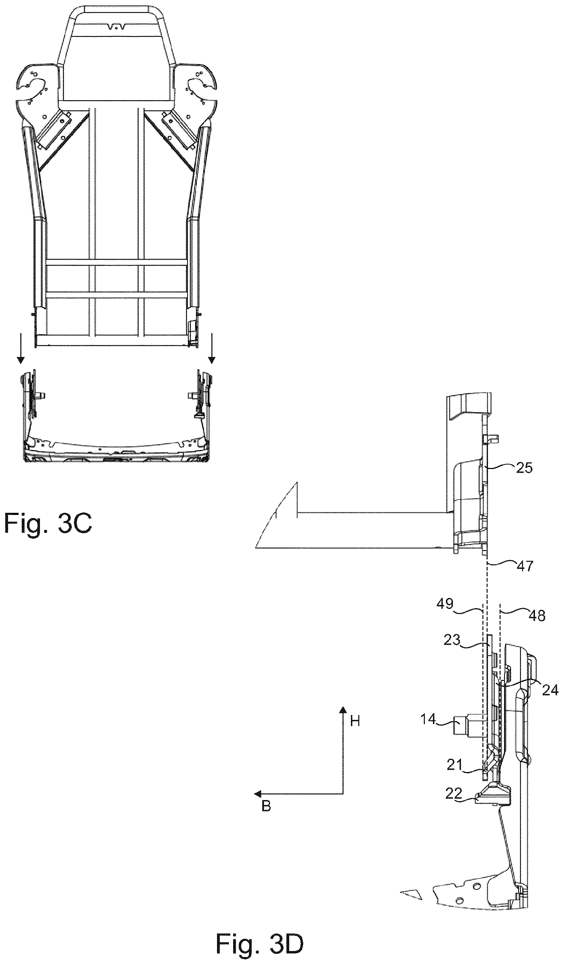

Wie insbesondere den Figuren 3A und 3C zu entnehmen ist, sind zwei erste Baugruppen 50 und zwei zweite Baugruppen 51 vorgesehen. Zwischen der ersten Baugruppe 50 und der zweiten Baugruppe 51 ist eine Spiralfeder 18 angeordnet, die je nach Stellung der Rückenlehne gespannt ist oder nicht. Die Funktionsweise der Spiralfeder 18 wird nachfolgend in Verbindung mit nachfolgenden Figuren genauer beschrieben.

Der Figur 3D ist die Lage der ersten 47, der zweiten 48 und der dritten Ebene 49 zueinander gezeigt. Wie weiter zu erkennen ist, erstreckt sich auch der erste Bereich 25 des Adaptergehäuses 17 in der ersten Ebene 47.

Ähnlich wie die erste Aussparung 11 ist auch der erste Anschlag 21 mit einem bestimmten dritten Winkel 52 gegenüber der Rückenlehnenlängsrichtung RL angeordnet. Der zweite Anschlag 22, welcher ortsfest gegenüber dem Sitzteil 3 angeordnet ist, ist mit einem konstanten vierten Winkel 53 gegenüber der Fahrzeugsitzhöhenrichtung H angeordnet.

Wird die Rückenlehne 2 um die erste Drehachse 7 gedreht, so verändert sich der Winkel zwischen Rückenlehnenlängsrichtung RL und Fahrzeugsitzhöhenrichtung ständig. Es kann daher vorkommen, dass, in einer radialen Richtung von der ersten Drehachse 7 weg gesehen, das erste 21 und das zweite Anschlagelement 22 auf einer gemeinsamen radialen Strecke angeordnet sind. Die Spiralfeder 19 weist hierbei eine gewisse Vorspannung auf.

In diesem Fall des Übereinstimmens von dem ersten 21 und dem zweiten Anschlagelement 22 steht die Spiralfeder 19, insbesondere dem zweiten Spiralfederende 20, sowohl mit dem ersten 21 als auch dem zweiten Anschlagelement 22 in Wirkkontakt. Wird die Rückenlehne 2 nun in Fahrzeugsitzlängsrichtung L weiter nach vorne gedreht, so wird das erste Anschlagelement 21 entsprechend mitgedreht und ebenfalls das zweite Spiralfederende 20. Dadurch bleibt das zweite Spiralfederende 20 weiterhin mit dem ersten Anschlagelement 21 in Kontakt und es wird gleichzeitig der Kontakt zwischen dem zweiten Spiralfederende 20 und dem zweiten Anschlagelement 22 gelöst.

Dadurch, dass das erste Spiralfederende 20 mittels des Bolzenelements 14 ortsfest gegenüber dem Adapterelement 9 angeordnet ist und ebenso das erste Anschlagelement 21 ortsfest an dem Adapterelement 9 angeordnet ist, wird die Vorspannung der Spiralfeder nicht geändert, so dass ohne Kraft aufzuwenden die Rückenlehne 2 nach vorne geklappt werden kann.

Wird hingegen die Rückenlehne 2 in Fahrzeugsitzlängsrichtung L nach hinten bewegt, so ändert sich die Situation. Das zweite Spiralfederende 20 steht weiterhin mit dem zweiten Anschlagelement 22 in Wirkkontakt und das erste Anschlagelement 21 wird von dem zweiten Spiralfederende 20 weg bewegt. Wird das Adapterelement 9 mit der Spiralfeder 19 weiter um die erste Drehachse 7 nach hinten gedreht, so wird die Vorspannung der Spiralfeder 19 weiter geändert, da das erste Spiralfederende 19 entsprechend dem Adapterelement 9 bewegt wird und das zweite Spiralfederende 20 weiterhin mit dem zweiten Anschlagelement 22 in Kontakt steht.

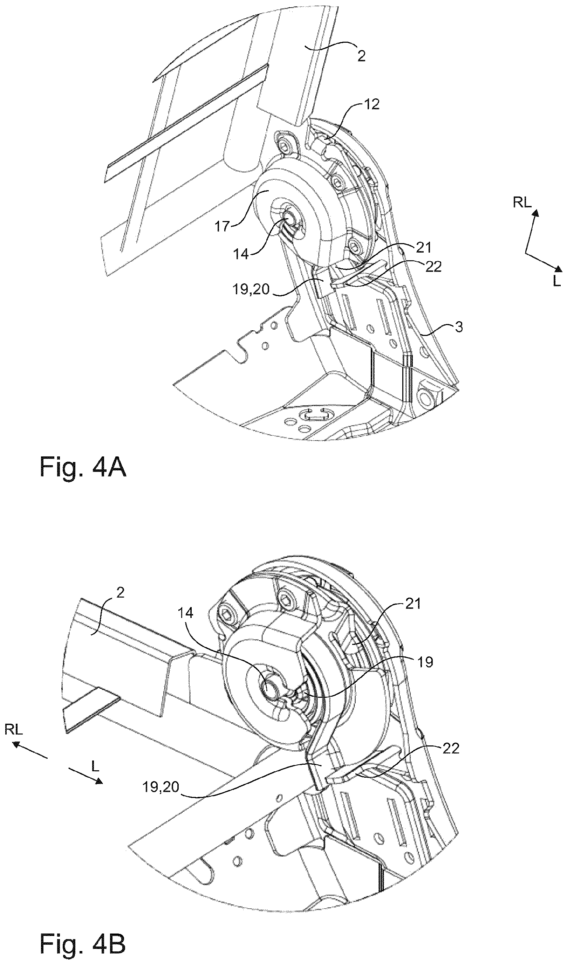

Die Figuren 4A bis 4C zeigen die verschiedenen Stellungen der Rückenlehne 2 gegenüber dem Sitzteil 3 und die Spiralfeder 19 in den Stellungen.

Die Figur 4A zeigt die Spiralfeder 19 in Kontakt mit dem ersten 21 und dem zweiten Anschlagelement 22. Die Rückenlehne 2 ist in dieser Situation nach vorne geneigt, so dass die Rückenlehenlängsrichtung RL einen fünften Winkel mit der Fahrzeugsitzlängsrichtung L einschließt, vorzugsweise einen Winkel von etwa 80°. Es sind aber natürlich auch andere fünfte Winkel denkbar, wobei diese von dem zweiten Winkel 16, dem dritten Winkel 52 und dem vierten Winkel 53 abhängen.

Die Figur 4B zeigt die Situation mit einer in Fahrzeugsitzlängsrichtung L nach hinten gedrehten Rückenlehne 2. Wie zu erkennen ist, ist die Spiralfeder 19, insbesondere das zweite Spiralfederende 20, mit dem zweiten Anschlagelement 22 in Wirkkontakt, das erste Anschlagelement 21 wurde entsprechend dem Adapterelement 9 mit nach hinten gedreht. Dadurch, dass das erste Spiralfederende 19 ebenfalls nach hinten gedreht wird, wird die Federspannung der Spiralfeder 19 verändert, so dass beim nach hinten bewegen der Rückenlehne 2 Kraft aufgewendet werden muss.

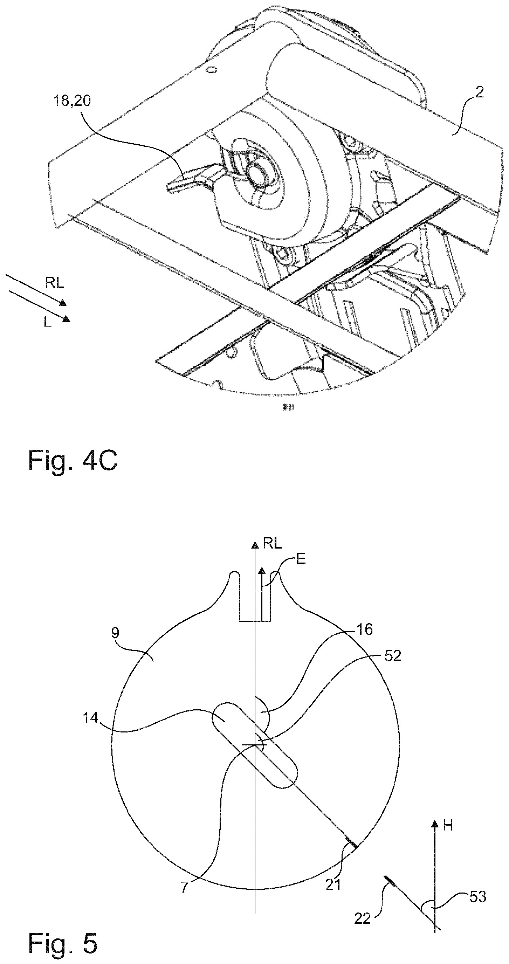

Die Figur 4C zeigt die Situation mit einer nach vorne gedrehten Rückenlehne 2, so dass die Rückenlehnenlängsrichtung RL der Fahrzeugsitzlängsrichtung L entspricht. Wie zu erkennen ist, steht das zweite Spiralfederende 20 ausschließlich mit dem ersten Anschlagelement 21 in Wirkkontakt. Es ist daher keine zusätzliche Kraft notwendig, die Rückenlehne 2 nach vorne zu drehen.

Die Figur 5 zeigt dabei eine schematische Übersicht über den ersten 10, zweiten 16, dritten 52 und vierten Winkel 53. Die Rückenlehnenlängsrichtung RL entspricht dabei der Haupterstreckungsrichtung der Rückenlehne 2, welche bei einer Drehung des Adapterelements 9 ebenso um die erste Drehachse 7 gedreht wird.

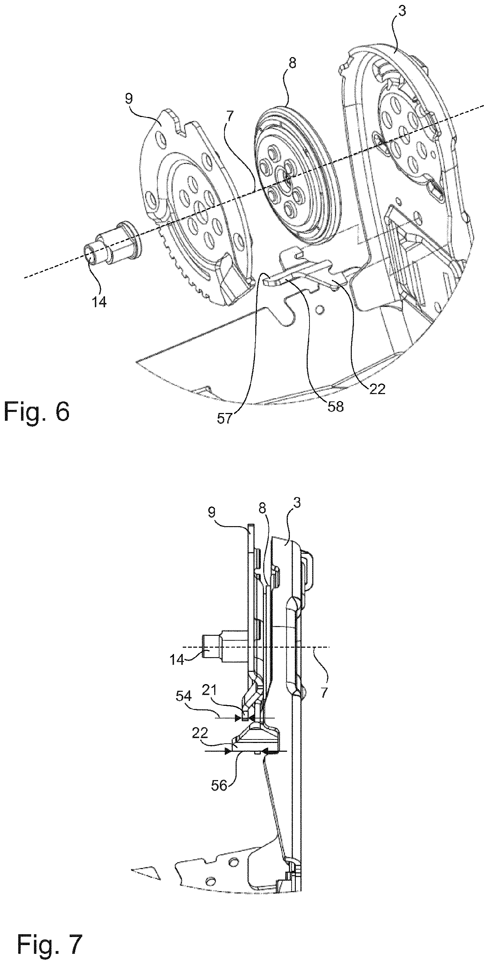

Die Figur 6 zeigt insbesondere die Bauelemente der Vorrichtung 1, welche mit dem Sitzteil 3 fest verbunden sind, vorliegend die Neigungsverstellungseinrichtung 8, das Adapterelement 9 und das Bolzenelement 14, wobei das Bolzenelement 14 fest mit dem Adapterelement 9 und das Adapterelement 9 fest mit der Neigungsverstellungseinrichtung 8 verbunden ist. Weiter ist das zweite Anschlagelement 22 zu erkennen, welches ebenfalls fest mit dem Sitzteil 3 verbunden ist. Vorzugsweise handelt es sich bei der festen Verbindung um eine Schweißverbindung.

Wie weiter zu erkennen ist, weist das zweite Anschlagelement 22 einen Verbreiterungsbereich 58 auf, welcher sich in axialer Richtung der Drehachse 7 in Längsrichtung L von vorne nach hinten stetig verbreitert.

Dabei weist das zweite Anschlagelement 22 einen zweiten Anschlagsbereich 49 auf, welcher sich senkrecht zu der ersten Drehachse 7 und in axialer Richtung der Drehachse 7 erstreckt.

Die Elemente der Figur 6 sind in der Figur 7 in einem zusammengebauten Zustand in einer Vorderansicht zu sehen. Wie insbesondere zu erkennen ist, ist die axiale Erstreckung 54 des ersten Anschlagelements 21, insbesondere des ersten Anschlagbereichs 55, kleiner als die axiale Erstreckung 56 des zweiten Anschlagelements 22, insbesondere des zweiten Anschlagbereichs 49.

Wird die Rückenlehne 2 um die erste Drehachse 7 gedreht, so verändert sich der Winkel zwischen Rückenlehnenlängsrichtung RL und Fahrzeugsitzlängsrichtung L ständig. Es kann daher vorkommen, dass, in einer Richtung senkrecht zu der ersten Drehachse 7 gesehen, das erste 21 und das zweite Anschlagelement 22 auf einer gemeinsamen Strecke angeordnet sind. Die Spiralfeder 18 weist hierbei eine gewisse Vorspannung auf, wobei es jedoch auch denkbar ist, dass die Spiralfeder 18 keine Vorspannung aufweist.

In diesem Fall des Übereinstimmens von dem ersten 21 und dem zweiten Anschlagelement 22 steht die Spiralfeder 19, insbesondere dem zweiten Spiralfederende 20, sowohl mit dem ersten 21 als auch dem zweiten Anschlagelement 22 in Wirkkontakt. Wird die Rückenlehne 2 nun in Fahrzeugsitzlängsrichtung L weiter nach vorne gedreht, so wird das erste Anschlagelement 21 entsprechend mitgedreht und ebenfalls das zweite Spiralfederende 20. Dadurch bleibt das zweite Spiralfederende 20 weiterhin mit dem ersten Anschlagelement 21 in Kontakt und es wird gleichzeitig der Kontakt zwischen dem zweiten Spiralfederende 20 und dem zweiten Anschlagelement 22 gelöst.

Dadurch, dass das erste Spiralfederende 20 mittels des Bolzenelements 14 ortsfest gegenüber dem Adapterelement 9 angeordnet ist und ebenso das erste Anschlagelement 21 ortsfest an dem Adapterelement 9 angeordnet ist, wird die Vorspannung der Spiralfeder nicht geändert, so dass ohne Kraft aufzuwenden die Rückenlehne 2 nach vorne geklappt werden kann.

Wird hingegen die Rückenlehne 2 in Fahrzeugsitzlängsrichtung L nach hinten bewegt, so ändert sich die Situation. Das zweite Spiralfederende 20 steht weiterhin mit dem zweiten Anschlagelement 22 in Wirkkontakt und das erste Anschlagelement 21 wird von dem zweiten Spiralfederende 20 weg bewegt. Wird das Adapterelement 9 mit der Spiralfeder 19 weiter um die erste Drehachse 7 nach hinten gedreht, so wird die Vorspannung der Spiralfeder 19 weiter geändert, da das erste Spiralfederende 19 entsprechend dem Adapterelement 9 bewegt wird und das zweite Spiralfederende 20 weiterhin mit dem zweiten Anschlagelement 22 in Kontakt steht.

Gemäß einer Ausführungsform weist die Spiralfeder 18 eine Vorspannung auf, entsprechend der Positionen des ersten 19 und zweiten Spiralfederende 20, insbesondere des zweiten Spiralfederendes 20 gegenüber den Anschlagelementen 21, 22. Die grundlegende Vorspannung der Spiralfeder 18 ist hierbei vorgegeben durch den Wirkkontakt des zweiten Spiralfederendes mit dem zweiten Anschlagelement 22, da zumindest immer diese Vorspannung vorliegt, wie bereits weiter oben beschrieben. Bei einer Drehung der Rückenlehne 2 in Fahrzeugsitzlängsrichtung L nach vorne herrscht weiter die grundlegende Vorspannung vor, wohingegen bei einer Drehung der Rückenlehne 2 nach hinten die Vorspannung verändert wird bei Drehung der Rückenlehne 2.

Es ist jedoch bei Montage der Vorrichtung 1 bzw. des Fahrzeugsitzes 2 nicht vorteilhaft, eine Vorspannung der Spiralfeder durch einen Arbeiter einstellen zu lassen, da dies eine nicht unerhebliche Gefahr für den Arbeiter darstellen kann.

Bei der Montage wird daher zur Einstellung der Vorspannung der Spiralfeder 18 ein einmaliger Montageschritt ausgeführt, welcher in seinen Einzelschritten nachfolgend detaillierter beschrieben wird.

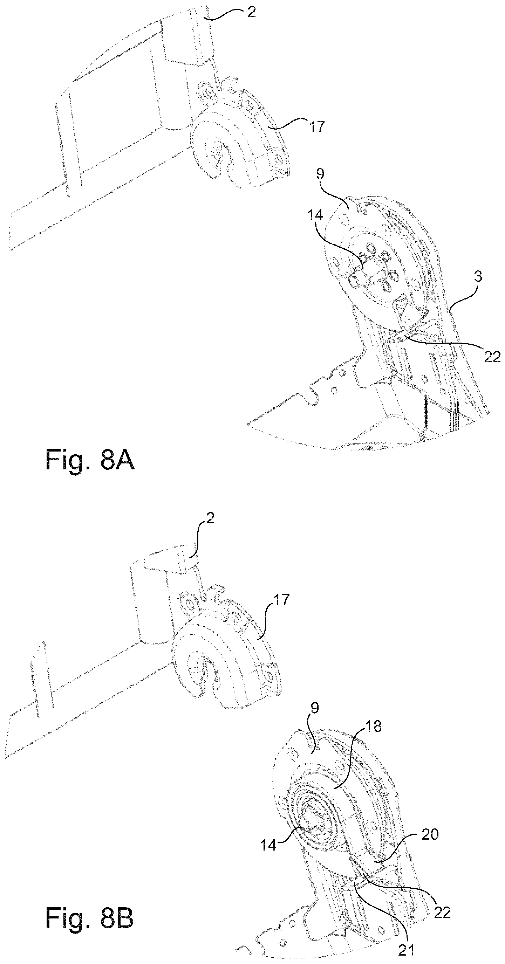

In einem ersten Schritt S1, dargestellt in der Figur 8A, sind die jeweiligen Bauteile entsprechend an der Rückenlehne 2 bzw. dem Sitzteil 3 angebracht. Dabei ist das Adaptergehäuse 17 mit der Rückenlehne 2 fest verbunden und die Neigungsverstellungseinrichtung 8, das Adapterelement 9 und das Bolzenelement 14 mit dem Sitzteil 3 fest verbunden. Ebenso ist das zweite Anschlagelement 22 fest mit dem Sitzteil 3 verbunden.

In einem zweiten Schritt S2, dargestellt in der Figur 8B, wird die Spiralfeder 18 auf das Bolzenelement 14 aufgesteckt, so dass das erste Spiralfederende 19 ortsfest mit dem Bolzenelement 14 verbunden ist, weist jedoch noch einen Freiheitsgrad in axialer Richtung der ersten Drehachse 7 auf. Wie zu erkennen ist, ist das zweite Spiralfederende 20 noch weder mit dem ersten 21 noch mit dem zweiten Anschlagelement 22 in Wirkkontakt. Insbesondere ist das zweite Spiralfederende 20 in Längsrichtung L gesehen vor dem ersten 21 und dem zweiten Anschlagelement 22 angeordnet, wobei das zweite Anschlagelement 22 vor dem ersten Anschlagelement 21 angeordnet ist.

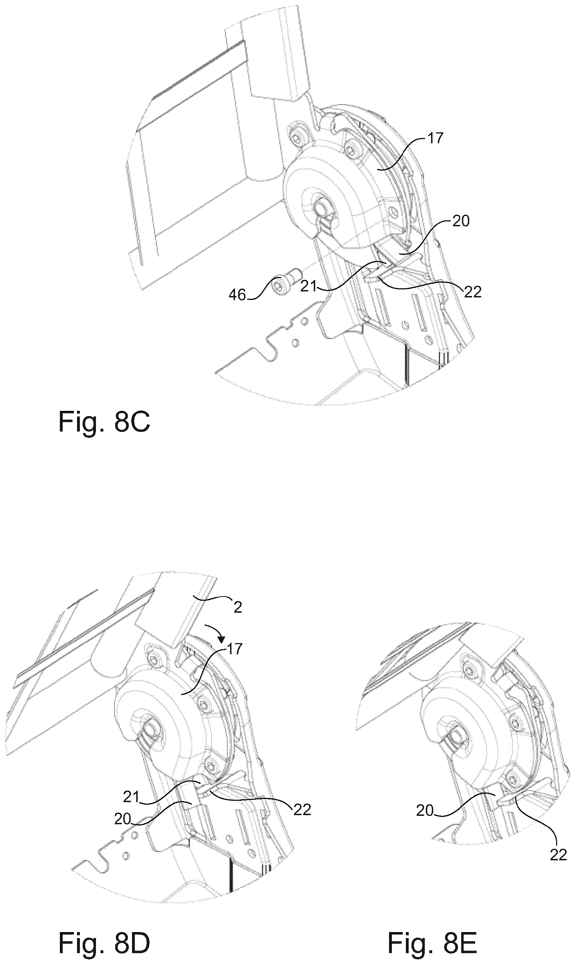

In einem dritten Schritt S3, dargestellt in Figur 8C, wird das Adaptergehäuse 17 mit dem Adapterelement 9 verschraubt durch Schrauben 46 und der Freiheitsgrad der Spiralfeder 18 in axialer Richtung entfernt.

In der Figur 8D wird ein vierter Schritt S4 gezeigt, in welchem die Rückenlehne 2 in Fahrzeugsitzlängsrichtung L nach vorne gedreht wird. Durch die Ausgestaltung des zweiten Anschlagelements 22 mit dem Verbreiterungsbereich 58 wird das zweite Spiralfederende 20 an dem Verbreiterungsbereich 58 solange zwangsgeführt, bis das zweite Spiralfederende 20 das zweite Anschlagelement 22, insbesondere den zweiten Anschlagbereich 57, übersprungen hat, wie in der Figur 8E dargestellt. Somit wurde die grundlegende Vorspannung der Spiralfeder 18 eingestellt. Jedoch befindet sich das zweite Spiralfederende 19 nun zwischen dem ersten 21 und dem zweiten Anschlagelement 22, so dass bisher nur ein Wirkkontakt des zweiten Spiralfederendes 20 mit dem zweiten Anschlagelement 22 möglich ist. Um einen Wirkkontakt mit dem ersten Anschlagelement 21 zu ermöglichen, ist es notwendig, dass zweite Spiralfederende 20 in Längsrichtung L gesehen sowohl hinter dem ersten 21 als auch dem zweiten Anschlagelement 22 angeordnet ist.

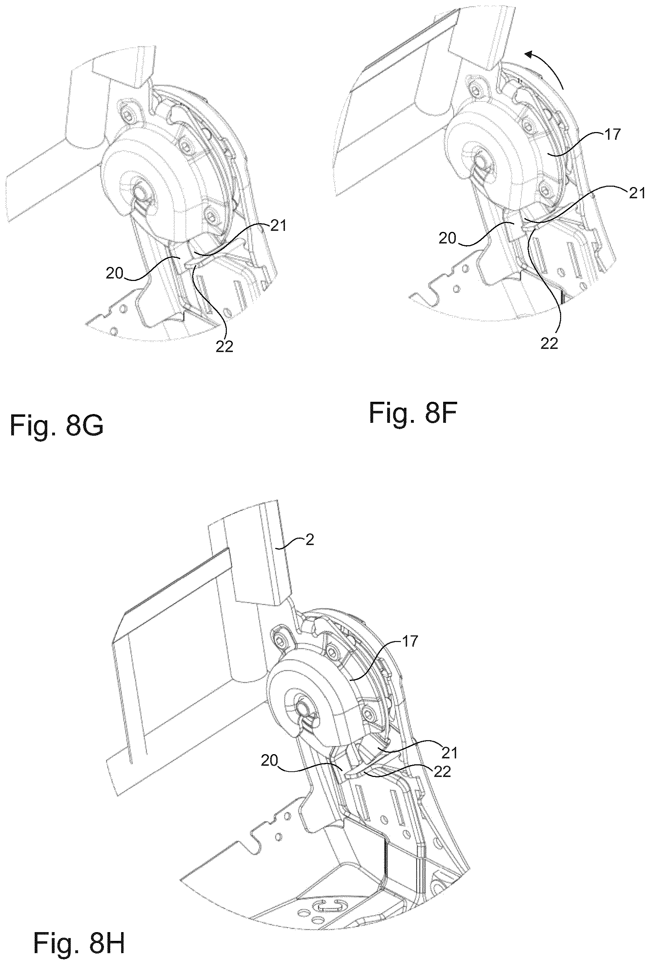

Dies wird in einem Schritt S5, dargestellt in den Figuren 8F und 8G, hergestellt, indem die Rückenlehne 2 in Längsrichtung L gesehen wieder nach hinten gedreht wird. Da im Schritt S4 das zweite Spiralfederende 20 zwischen dem ersten 21 und dem zweiten Anschlagelement 22 angeordnet ist, wird durch Drehung der Rückenlehne 2 nach hinten das erste Anschlagelement 21 nach vorne bewegt. Durch die Ausgestaltung des ersten Anschlagelements 21, insbesondere des Mittelbereichs 40, welcher ähnlich dem Verbreiterungsbereich 58 ausgebildet ist. Da sich das zweite Anschlagelement 22 in axialer Richtung weiter erstreckt als das erste Anschlagelement 21, wird das zweite Spiralfederende 20 durchgehend von dem zweiten Anschlagelement gehalten. Das zweite Spiralfederende 20 bewegt sich zwangsführt an dem Mittelbereich 40 und überspringt auch das erste Anschlagelement 21.

In einem abschließenden Schritt S6, dargestellt in der Figur 8H, wird die Rückenlehne in eine Position gebracht, in welcher die Rückenlehnenlängsrichtung RL und die Fahrzeugsitzlängsrichtung L einen Winkel von 90° aufweisen. Der Winkel zwischen der ersten Richtung 48 und der zweiten Richtung 50 ist dabei größer als 0°, vorzugsweise 10°.

### Bezugszeichenliste

- 1: Vorrichtung
- 2: Rückenlehne
- 3: Sitzteil
- 4: hinterer Bereich des Sitzteils
- 5: unterer Bereich der Rückenlehne
- 6: Fahrzeugsitz
- 7: erste Drehachse
- 8: Neigungsverstellungseinrichtung
- 9: Adapterelement
- 10: erster Winkel
- 11: Aussparung
- 12: erste Lasche
- 13: zweite Aussparung
- 14: Bolzenelement
- 15: flächig ausgebildeter Bereich
- 16: zweiter Winkel
- 17: Adaptergehäuse
- 18: Spiralfeder
- 19: erstes Spiralfederende
- 20: zweites Spiralfederende
- 21: erstes Anschlagelement
- 22: zweites Anschlagelement
- 23: erster Bereich des Adapterelements
- 24: zweiter Bereich des Adapterelements
- 25: erster Bereich Adaptergehäuse
- 26: zweiter Bereich Adaptergehäuse
- 27: erste Verbindungsstelle
- 27': erste komplementäre Verbindungsstelle
- 28, 28': zweite Verbindungsstelle
- 29: Adapterplatte
- 30: zentraler Bereich
- 31: Seitenbereich
- 32: Breite Lasche
- 33: Breite zentraler Bereich
- 34: Höhe Lasche
- 35: Höhe zentraler Bereich
- 36: Trichter
- 37: kurze Grundseite
- 38: zylindrischer Abschnitt
- 39: Anfangsbereich
- 40: Mittelbereich
- 41: Endbereich
- 42: Übergangsbereich
- 43: Verbindungsabschnitt
- 44: Breite zweite Aussparung
- 45: nach oben erstreckender Abschnitt
- 46: Schraube
- 47: erste Ebene
- 48: zweite Ebene
- 49: dritte Ebene
- 50: erste Baugruppe
- 51: zweite Baugruppe
- 52: dritter Winkel
- 53: vierter Winkel54 axiale Erstreckung
- 55: erster Anschlagbereich
- 56: axiale Erstreckung
- 57: zweiter Anschlagbereich
- 58: Verbreiterungsbereich

## Patentansprüche

1. Fahrzeugsitz (6) mit einer Vorrichtung (1) zum Verbinden eines in Fahrzeugsitzhöhenrichtung gesehenen unteren Bereichs (5) einer Rückenlehne (2) mit einem in Fahrzeugsitzlängsrichtung gesehenen hinteren Bereich (4) eines Sitzteils (3) des Fahrzeugsitzes (6), wobei eine um eine in Fahrzeugsitzbreitenrichtung verlaufende erste Drehachse (7) drehbare Neigungsverstellungseinrichtung (8) zum Einstellen einer Neigung der Rückenlehne (2) relativ zum Sitzteil (3) mit dem Sitzteil (3) verbunden ist, wobei
die Vorrichtung (1) ein mit der Neigungsverstellungseinrichtung (8) fest verbundenes und um die erste Drehachse (7) drehbares Adapterelement (9) umfasst, welches eine sich in einem ersten Winkel (10) zu einer Rückenlehnenlängsrichtung erstreckende erste Aussparung (11) aufweist, wobei die erste Aussparung (11) mit einer an der Rückenlehne (2) angeordneten und komplementär zu der ersten Aussparung (11) ausgebildeten ersten Lasche (12) verbindbar ist
**dadurch gekennzeichnet, dass**
die Rückenlehne (2) eine zweite Aussparung (13) aufweist, welche mit einem mit dem Adapterelement (9) fest verbundenen Bolzenelement (14), welches um die erste Drehachse (7) drehbar angeordnet ist, in Wirkkontakt bringbar ist.

2. Fahrzeugsitz (6) mit einer Vorrichtung (1) gemäß Anspruch 1,
**dadurch gekennzeichnet, dass**
das Bolzenelement (14) mindestens einen flächig ausgebildeten Bereich (15) umfasst, welcher in Fahrzeugsitzbreitenrichtung gesehen einen zweiten Winkel (16) mit der Rückenlehnenlängsrichtung einschließt.

3. Fahrzeugsitz (6) mit einer Vorrichtung (1) nach einem der vorangegangenen Ansprüche,
**dadurch gekennzeichnet, dass**
an der Rückenlehne (2) ein Adaptergehäuse (17) angeordnet ist, welches die Lasche (12) und die zweite Aussparung (13) aufweist, wobei das Adaptergehäuse (17) mit dem Adapterelement (9) verbindbar ist.

4. Fahrzeugsitz (6) mit einer Vorrichtung (1) nach einem der vorangegangenen Ansprüche,
**dadurch gekennzeichnet, dass**
in Fahrzeugsitzbreitenrichtung gesehen das Adapterelement (9) zwischen der Rückenlehne (2) und dem Sitzteil (3) angeordnet ist, wobei zwischen dem Adapterelement (9) und dem Sitzteil (3) die Neigungsverstellungseinrichtung (8) angeordnet ist.

5. Fahrzeugsitz (6) mit einer Vorrichtung (1) nach Anspruch 2 oder 3,
**dadurch gekennzeichnet, dass**
die Vorrichtung (1) eine Spiralfeder (18) aufweist, welche mit einem ersten Spiralfederende (19) mit dem Bolzenelement (14) verbunden ist, wobei das zweite Spiralfederende (20) mit einem ersten Anschlagelement (21) des Adapterelements (9) und/oder mit einem zweiten Anschlagelement (22) des Sitzteils (3) wechselwirkt.

6. Fahrzeugsitz (6) mit einer Vorrichtung (1) nach Anspruch 5,
**dadurch gekennzeichnet, dass**
die Spiralfeder (18) zwischen der Rückenlehne (2) und dem Adapterelement (9) angeordnet ist.

7. Fahrzeugsitz (6) mit einer Vorrichtung (1) nach einem der vorangegangen Ansprüche,
**dadurch gekennzeichnet, dass**
das Adapterelement (9) einen ersten (23) und einen zweiten Bereich (24) aufweist, wobei der erste Bereich (23) in einer ersten Ebene (47) und der zweite Bereich (24) in einer zweiten Ebene (48) angeordnet sind, wobei die erste Ebene (47) und die zweite Ebene (48) parallel zueinander ausgebildet sind.

8. Fahrzeugsitz (6) mit einer Vorrichtung (1) nach einem der vorangegangenen Ansprüche,
**dadurch gekennzeichnet, dass**
der erste Winkel (10) entweder 0° oder 180° beträgt.

9. Verfahren zum Verbinden eines in Fahrzeugsitzhöhenrichtung gesehenen unteren Bereichs einer Rückenlehne (5) mit einem in Fahrzeugsitzlängsrichtung gesehenen hinteren Bereich (4) eines Sitzteils (3) eines Fahrzeugsitzes (6), wobei eine um eine in Fahrzeugsitzbreitenrichtung verlaufende erste Drehachse (7) drehbare Neigungsverstellungseinrichtung (8) zum Einstellen einer Neigung der Rückenlehne (2) relativ zum Sitzteil (3) mit dem Sitzteil (3) verbunden ist, wobei
die Vorrichtung (1) ein mit der Neigungsverstellungseinrichtung (8) fest verbundenes und um die erste Drehachse (7) drehbares Adapterelement (9) umfasst, welches eine sich in einem ersten Winkel (10) zu einer Rückenlehnenlängsrichtung erstreckende erste Aussparung (11) aufweist, wobei die erste Aussparung (11) mit einer an der Rückenlehne (2) angeordneten und komplementär zu der ersten Aussparung (11) ausgebildeten ersten Lasche (12) verbunden wird,
**dadurch gekennzeichnet, dass**
die Rückenlehne (2) eine zweite Aussparung (13) aufweist, welche mit einem mit dem Adapterelement (9) fest verbundenen Bolzenelement (14), welches um die erste Drehachse (7) drehbar angeordnet ist, in Wirkkontakt gebracht wird.

## Claims

1. Vehicle seat (6) with a device (1) for connecting a lower region (5), when viewed in the vehicle seat height direction, of a backrest (2) to a rear region (4), when viewed in the vehicle seat length direction, of a seat part (3) of the vehicle seat (6), wherein a tilt adjustment device (8) which is rotatable about a first axis of rotation (7) extending in the vehicle seat width direction for adjusting a tilt of the backrest (2) relative to the seat part (3) is connected to the seat part (3), wherein
the device (1) comprises an adapter element (9) which is rigidly connected to the tilt adjustment device (8) and is rotatable about the first axis of rotation (7), which element has a first recess (11) which extends at a first angle (10) to a backrest length direction, wherein the first recess (11) is connectable to a first tab (12) which is arranged on the backrest (2) and is formed so as to be complementary to the first recess (11)
**characterised in that**
the backrest (2) has a second recess (13) which can be brought into operative contact with a bolt element (14) which is rigidly connected to the adapter element (9) and is arranged so as to be rotatable about the first axis of rotation (7).

2. Vehicle seat (6) with a device (1) according to claim 1,
**characterised in that**
the bolt element (14) comprises at least one planar region (15) which, when viewed in the vehicle seat width direction, encloses a second angle (16) together with the backrest length direction.

3. Vehicle seat (6) with a device (1) according to any of the preceding claims,
**characterised in that**
an adapter housing (17) is arranged on the backrest (2), which housing comprises the tab (12) and the second recess (13), the adapter housing (17) being connectable to the adapter element (9).

4. Vehicle seat (6) with a device (1) according to any of the preceding claims,
**characterised in that**
when viewed in the vehicle seat width direction, the adapter element (9) is arranged between the backrest (2) and the seat part (3), wherein the tilt adjustment device (8) is arranged between the adapter element (9) and the seat part (3).

5. Vehicle seat (6) with a device (1) according to claim 2 or 3,
**characterised in that**
the device (1) comprises a coil spring (18) which is connected to the bolt element (14) by a first coil spring end (19), wherein the second coil spring end (20) interacts with a first stop element (21) of the adapter element (9) and/or with a second stop element (22) of the seat part (3).

6. Vehicle seat (6) with a device (1) according to claim 5,
**characterised in that**
the coil spring (18) is arranged between the backrest (2) and the adapter element (9).

7. Vehicle seat (6) with a device (1) according to any of the preceding claims,
**characterised in that**
the adapter element (9) comprises a first (23) and a second region (24), wherein the first region (23) is arranged in a first plane (47) and the second region (24) is arranged in a second plane (48), wherein the first plane (47) and the second plane (48) are formed in parallel with one another.

8. Vehicle seat (6) with a device (1) according to any of the preceding claims,
**characterised in that**
the first angle (10) is either 0° or 180°.

9. Method for connecting a lower region (5), when viewed in the vehicle seat height direction, of a backrest to a rear region (4), when viewed in the vehicle seat length direction, of a seat part (3) of a vehicle seat (6), wherein a tilt adjustment device (8) which is rotatable about a first axis of rotation (7) extending in the vehicle seat width direction for adjusting a tilt of the backrest (2) relative to the seat part (3) is connected to the seat part (3), wherein
the device (1) comprises an adapter element (9) which is rigidly connected to the tilt adjustment device (8) and is rotatable about the first axis of rotation (7), which element has a first recess (11) which extends at a first angle (10) to a backrest length direction, wherein the first recess is connectable to a first tab (12) which is arranged on the backrest (2) and is formed so as to be complementary to the first recess (11)
**characterised in that**
the backrest (2) has a second recess (13) which can be brought into operative contact with a bolt element (14) which is rigidly connected to the adapter element (9) and is arranged so as to be rotatable about the first axis of rotation (7).

## Revendications

1. Siège de véhicule (6) comportant un dispositif (1) pour la liaison d'une région (5) inférieure lorsqu'elle est vue dans la direction de la hauteur du siège de véhicule, d'un dossier (2) avec une région (4) arrière lorsqu'elle est vue dans la direction longitudinale du siège de véhicule, d'une partie siège (3) du siège de véhicule (6), un dispositif de réglage d'inclinaison (8) apte à tourner autour d'un premier axe de rotation (7) s'étendant dans la direction de la largeur du siège de véhicule, pour le réglage d'une inclinaison du dossier (2) par rapport à la partie siège (3), étant relié à la partie siège (3),
le dispositif (1) comportant un élément adaptateur (9) relié solidement au dispositif de réglage d'inclinaison (8) et apte à tourner autour du premier axe de rotation (7), lequel élément adaptateur (9) présente un premier renfoncement (11) s'étendant dans un premier angle (10) par rapport à une direction longitudinale du dossier, le premier renfoncement (11) étant apte à être relié à une première languette (12) disposée sur le dossier (2) et formée de façon complémentaire au premier renfoncement (11)
**caractérisé par le fait que**
le dossier (2) présente un second renfoncement (13), lequel est apte à être amené en contact actif avec un élément boulon (14) relié solidement à l'élément adaptateur (9), lequel élément boulon (14) est disposé apte à tourner autour du premier axe de rotation (7).

2. Siège de véhicule (6) comportant un dispositif (1) selon la revendication 1,
**caractérisé par le fait que**
l'élément boulon (14) comporte au moins une région formée plane (15), laquelle, lorsqu'elle est vue dans la direction de la largeur du siège de véhicule, fait un second angle (16) avec la direction longitudinale du dossier.

3. Siège de véhicule (6) comportant un dispositif (1) selon l'une des revendications précédentes,
**caractérisé par le fait que**
sur le dossier (2) est disposé un boîtier d'adaptateur (17), lequel présente la languette (12) et le second renfoncement (13), le boîtier d'adaptateur (17) étant apte à être relié à l'élément adaptateur (9).

4. Siège de véhicule (6) comportant un dispositif (1) selon l'une des revendications précédentes,
**caractérisé par le fait que**
lorsqu'il est vu dans la direction de la largeur du siège de véhicule, l'élément adaptateur (9) est disposé entre le dossier (2) et la partie siège (3), le dispositif de réglage d'inclinaison (8) étant disposé entre l'élément adaptateur (9) et la partie siège (3).

5. Siège de véhicule (6) comportant un dispositif (1) selon l'une des revendications 2 ou 3,
**caractérisé par le fait que**
le dispositif (1) présente un ressort en spirale (18), lequel est relié à l'élément boulon (14) par une première extrémité de ressort en spirale (19), la seconde extrémité de ressort en spirale (20) interagissant avec un premier élément de butée (21) de l'élément adaptateur (9) et/ou avec un second élément de butée (22) de la partie siège (3).

6. Siège de véhicule (6) comportant un dispositif (1) selon la revendication 5,
**caractérisé par le fait que**
le ressort en spirale (18) est disposé entre le dossier (2) et l'élément adaptateur (9).

7. Siège de véhicule (6) comportant un dispositif (1) selon l'une des revendications précédentes,
**caractérisé par le fait que**
l'élément adaptateur (9) présente une première (23) et une seconde région (24), la première région (23) étant disposée dans un premier plan (47) et la seconde région (24) étant disposée dans un second plan (48), le premier plan (47) et le second plan (48) étant formés parallèles entre eux.

8. Siège de véhicule (6) comportant un dispositif (1) selon l'une des revendications précédentes,
**caractérisé par le fait que**
le premier angle (10) est soit de 0° soit de 180°.

9. Procédé de liaison d'une région inférieure lorsqu'elle est vue dans la direction de la hauteur du siège de véhicule, d'un dossier (5) à une région (4) arrière lorsqu'elle est vue dans la direction longitudinale du siège de véhicule, d'une partie siège (3) d'un siège de véhicule (6), un dispositif de réglage d'inclinaison (8) apte à tourner autour d'un premier axe de rotation (7) s'étendant dans la direction de la largeur du siège de véhicule, pour le réglage d'une inclinaison du dossier (2) par rapport à la partie siège (3), étant relié à la partie siège (3),
le dispositif (1) comportant un élément adaptateur (9) relié solidement au dispositif de réglage d'inclinaison (8) et apte à tourner autour du premier axe de rotation (7), lequel élément adaptateur (9) présente un premier renfoncement (11) s'étendant dans un premier angle (10) par rapport à une direction longitudinale du dossier, le premier renfoncement (11) étant relié à une première languette (12) disposée sur le dossier (2) et formée de façon complémentaire au premier renfoncement (11)
**caractérisé par le fait que**
le dossier (2) présente un second renfoncement (13), lequel est amené en contact actif avec un élément boulon (14) relié solidement à l'élément adaptateur (9), lequel élément boulon (14) est disposé apte à tourner autour du premier axe de rotation (7).
